# EUROPÄISCHE PATENTSCHRIFT

(11) **EP 1 486 401 B1**
(45) Veröffentlichungstag und Bekanntmachung des Hinweises auf die Patenterteilung: **03.01.2007**
(21) Anmeldenummer: 04102521.4
(22) Anmeldetag: 04.06.2004
(51) Int. Cl.: B62D 21/02, A01M 7/00, B60P 3/22

(54) **Rahmen**
Frame
Chassis

(30) Priorität: 10.06.2003 US 459314
(43) Veröffentlichungstag der Anmeldung: 15.12.2004
(73) Patentinhaber: DEERE & COMPANY, Moline, Illinois 61265-8098 (US)
(72) Erfinder: Engelbrecht, Joshua Jacob, 50021, Ankeny (US); Barker, Mark Eugene, 50021, Ankeny (US); Baxter, Garry Eugene, 50021, Ankeny (US); Anderson, Jack Conan, IA 50156, Madrid (US)
(74) Vertreter: Holst, Sönke

(56) Entgegenhaltungen:
- EP-A- 0 968 878
- GB-A- 258 394
- US-A- 1 422 107
- US-A- 5 135 258
- US-A- 5 593 070
- US-A- 5 782 493

## Beschreibung

Die Erfindung betrifft einen Rahmen für ein landwirtschaftliches Gerät mit einem ersten und einem zweiten sich in Längsrichtung erstreckenden Hauptträger, wobei die Hauptträger in Querrichtung zueinander beabstandet angeordnet sind und wenigstens ein Hauptträger einen mit einer Öffnung versehenen Bereich aufweist, einem auf den Hauptträgern gelagerter Behälter mit einem zwischen den Hauptträgern positionierten Auslasskanal und einer Rohrleitungsanordnung, welche sich im Wesentlichen horizontal erstreckt und ausgehend vom Auslasskanal durch die Öffnung des wenigstens einen Hauptträgers hindurch geführt ist und an eine Stelle außerhalb des Rahmens führt.

Landwirtschaftliche Maschinen, wie z. B. selbstfahrende Feldspritzen, weisen einen Hauptrahmen auf, der zum Bewegen über ein Feld von einer Räderkonstruktion getragen wird. Der Hauptrahmen umfasst üblicherweise größere sich in Längsrichtung erstreckende Hauptrahmenträger oder Schienen, auf denen die Kabine der Maschine, der Antriebsstrang, verschiedene Flüssigkeitsbehälter, inklusive größere Behälter für chemische Lösungen, und Rohrleitungen gelagert sind. Leitungen für die Behälter und andere Rohrleitungen, die zwischen den Hauptrahmenträgern angeordnet sind, sind oftmals schwer zugänglich. Daher müssen Rohrleitungen entweder über oder unter die Hauptrahmenträger an außerhalb der Hauptrahmenträger gelegene Stellen geführt werden, um für eine Bedienperson gut zugänglich zu sein. Derartige Rohrverlegungen erfordern Rohrbögen und zusätzliche Rohrverlängerungen, was zu einem unansehnlichen und überhäuften Erscheinungsbild der Maschine führt. Die Rohrleitungen sind aufgrund der erhöhten Länge und nichtlinearen Verlegung schwerer zu reinigen. Die nach außen geführten Leitungen sind des Weiteren anfällig gegenüber Beschädigungen durch hochgewachsenes Getreide, Gras, Geäst, Fremdkörper und andere hineinragende Objekte. Behälter müssen vom Hauptrahmen angehoben montiert werden, um die erforderliche Verlegung der Leitungen um die Hauptrahmenträger herum zu ermöglichen. Dies führt zu höheren Transporthöhen und zu einem höheren Schwerpunkt der Maschine.

Die US 5,593,070, die den Oberbegriff des Anspruchs 1 bildet, offenbart ein Tankfahrzeug, welches einen auf einer Rahmenkonstruktion gelagerten Tank mit einem Rohrleitungssystem umfasst, wobei das Rohrleitungssystem zwischen Tank und Rahmenkonstruktion nach außen geführt wird. Das hier offenbarte Fahrzeug weist im Wesentlichen die oben genannten Nachteile auf.

Die US 5,135,258 beschreibt einen Anhänger für Motorräder auf, welcher einen integrierten Tankapparat aufweist, der mit Kraftstoff befüllbare und unterhalb einer Rahmenkonstruktion des Anhängers gelagerte Tanks umfasst, wobei eine Tankleitung zum Entleeren der Tanks durch den Rahmen geführt wird. Eine derartige Konstruktion ist für die oben genannten landwirtschaftlichen Maschinen jedoch nicht geeignet.

Die der Erfindung zugrunde liegende Aufgabe wird darin gesehen, einen Rahmen der eingangs genannten Art anzugeben, durch welchen die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist ein Rahmen der eingangs genannten Art eine Öffnung auf, die mit wenigstens einem Verstärkungselement versehen ist, um den wenigstens einen Hauptträger im Bereich der Öffnung zu stabilisieren.

Ein erfindungsgemäßer Rahmen für ein landwirtschaftliches Gerät, beispielsweise für eine selbstfahrende Feldspritze, weist rohrförmige Hauptträger auf, auf denen ein Behälter und eine Rohrleitungsanordnung gelagert sind. Zwischen den Hauptträgern ist ein Auslasskanal angeordnet. Des Weiteren ist ein beträchtlicher Teil der Rohrleitungsanordnung zwischen den Hauptträgern und zwischen einer oberen und unteren Ebene der Hauptträger gelagert, um die Rohrleitungsanordnung zu schützen und ein besseres Erscheinungsbild zu erzielen. Die vertikal ausgerichteten Wände der Hauptträger weisen runde Öffnungen auf, die durch runde Rohre verstärkt sind. Die Rohre sind fest mit den Wänden verbunden um den Bereich um die Öffnungen herum abzudichten und das Eindringen von Verschmutzungen in die Hauptträger zu verhindern. Die runden Rohre weisen einen Trennspalt auf, um eine Verdrehungsflexibilität des Hauptrahmens zu gewähren, während hohe Spannungen in den Verbindungsstellen zwischen den runden Rohren und den Wänden vermieden werden. Durch die runden Rohre wird eine sich zwischen dem Auslasskanal und einer außerhalb des Hauptrahmens gelegenen Stelle erstreckende, horizontal ausgerichtete Durchführung für eine Flüssigkeitsleitung geschaffen, um die Leitungslänge zu reduzieren, Rohrbögen zu vermeiden, das Erscheinungsbild zu verbessern, Reinigungsfunktionen für die Leitungen zu verbessern und um eine tiefe Anbringung des Behälters auf dem Hauptrahmen zu ermöglichen. In zusätzlichen, verstärkten Öffnungen, die durch die Endbereiche der Hauptträger führen, werden hydraulische Leitungen und Zylinder aufgenommen, durch die verschiedene Funktionen für die Achsanordnungen bereitgestellt werden. Leitungen und Zylinder werden durch die Hauptträger geschützt, da ein wesentlicher Teil dessen zwischen den durch die Ober- und Unterseite der Hauptträger definierten Ebenen angeordnet ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines Teils einer landwirtschaftlichen Feldspritze und

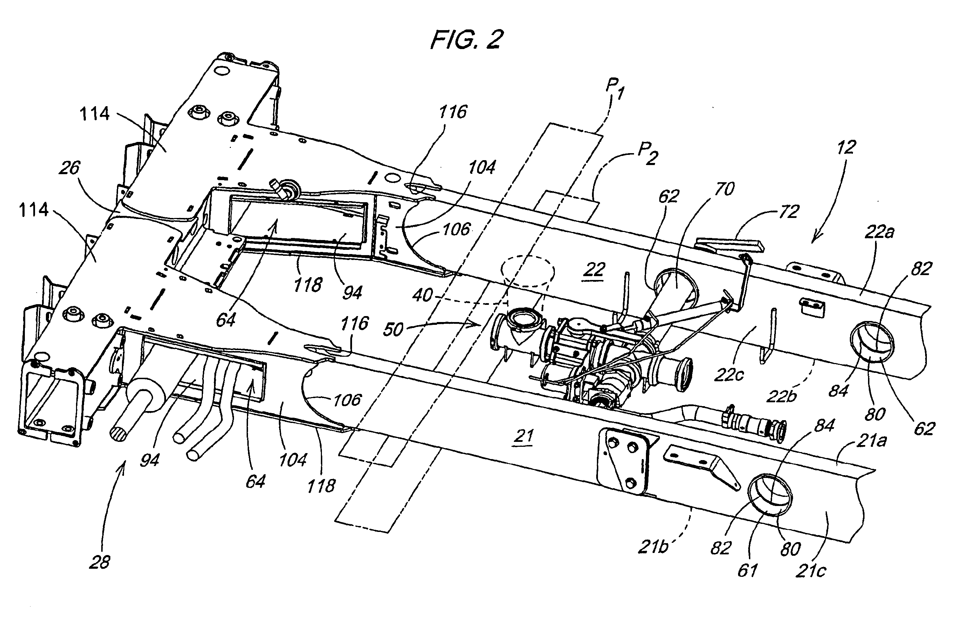

- Fig. 2: eine vergrößerte perspektivische Ansicht eines Teils des Hauptrahmens der landwirtschaftlichen Feldspritze aus Figur 1.

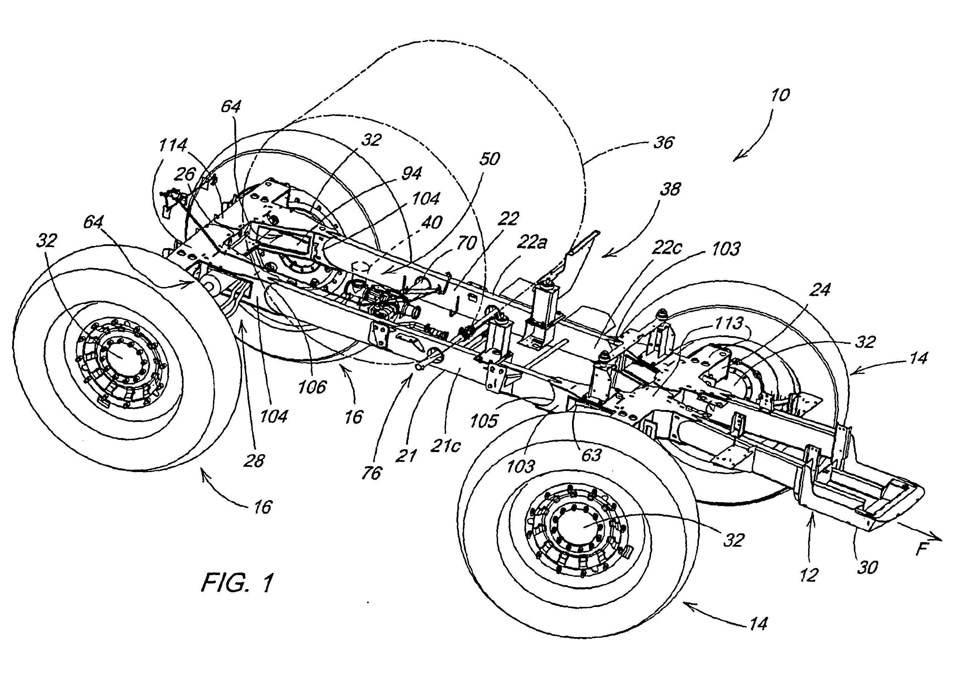

In Figur 1 ist ein Teil eines landwirtschaftlichen Gerätes, wie z. B. eine selbstfahrende Feldspritze 10, dargestellt, welches einen Hauptrahmen 12 aufweist. Der Hauptrahmen 12 wird zur Bewegung über ein Feld in eine Vorwärtsrichtung (F) von steuerbaren Vorderachsanordnungen 14 und Hinterachsanordnungen 16 getragen. Der Hauptrahmen 12 umfasst erste und zweite sich in Längsrichtung erstreckende röhrenförmige Hauptträger oder Schienen 21, 22, welche mit einem Vorderachsstützrahmen 24 für die Vorderachsanordnungen 14 und mit einem Hinterachsstützrahmen 26 für die Hinterachsanordnungen 16 verbunden sind. Hydraulisch betriebene Achskomponenten 28, wie z. B. eine Spurweitenverstelleinrichtung oder eine andere radachsenbezogene Verstelleinrichtung, stellt eine angetriebene Radverstellfunktion dar. Ein den Motor tragender Rahmen 30 ragt ausgehend vom Vorderachsstützrahmen 24 aus in Vorwärtsrichtung (F). Der Motor betreibt hydraulische Antriebseinrichtungen 32 an, die an den Achsanordnungen 14, 16 angeordnet sind und die selbstfahrende Feldspritze 10 antreiben.

Verschiedene Behälter 36 werden durch Behälterstützen 38 getragen, darunter inbegriffen ein größerer Behälter 36 für Flüssigkeit. Der Behälter 36 weist einen unteren Auslasskanal 40 auf, der zwischen den Hauptträgern 21, 22 und zwischen den Stützrahmen 24, 26 angeordnet ist. Eine Rohrleitungsanordnung 50 ist mit dem Auslasskanal 40 zwischen den Hauptträgern 21, 22 verbunden, wobei eine flüssigkeitsübertragende Verbindung zum Behälter 36 hergestellt ist.

Die Hauptträger 21, 22 weisen obere Wände 21a, 22a und untere Wände 21b, 22b auf, die durch gegenüberliegende Seitenwände 21c, 22c miteinander verbunden sind, wodurch ein im Wesentlichen rechtwinkliger Trägerquerschnitt gebildet wird.

Die oberen und unteren Wände 21a, 22a, 21b, 22b definieren parallele, horizontal ausgerichtete obere und untere Ebenen (P1, P2), die im Bereich der Rohrleitungsanordnung 50 liegen. Der Auslasskanal 40 und die Rohrleitungsanordnung 50 liegen im Wesentlichen zwischen den Hauptträgern 21, 22 zwischen den Ebenen P1, P2.

Die mittleren Bereiche der Hauptträger 21, 22 weisen Öffnungen 61, 62 auf, um ein Verlegen von Leitungen aus einem Bereich zwischen den inneren Seitenwänden 22c in einen Bereich außerhalb des Hauptrahmens 12 zu erleichtern, während eine im Wesentlichen zwischen den Ebenen P1, P2 durchgeführte Leitungsverlegung zum Schutz der Leitungen beibehalten wird, sowie ein besseres Erscheinungsbild und ein geradlinigerer Verlauf mit minimalen vertikalen Verlaufsänderungen erzielt werden kann.

Die Achskomponenten 28 und die für die Achskomponenten 28 vorgesehenen hydraulischen Leitungen werden in verstärkten vorderen und hinteren Öffnungen 63, 64 aufgenommen. Eine Versorgungsleitung 70 erstreckt sich durch eine der Öffnungen 62 und stellt eine Flüssigkeitsleitung dar, die waagerecht zwischen dem Auslasskanal 40 und einem außerhalb der Hauptträger 21, 22 angeordneten. Bedienungssteuerventil 72 angeordnet ist. Der Auslasskanal 40, die Rohrleitungsanordnung 50, inklusive vorhandener Aktuatoren, Ventile 72 und Versorgungsleitungen 70, sowie die hydraulisch betriebenen Achskomponenten 28 sind im Wesentlichen zwischen den Ebenen P1, P2 gelegen. Verschiedene Arten von Steuerleitungen 76, inklusive elektrischer und hydraulischer Leitungen, können zwischen Bereichen innerhalb und außerhalb der Hauptträger 21, 22 durch die Öffnungen 61, 62 verlegt werden, anstatt oberhalb oder unterhalb der Hauptträger 21, 22.

Die Öffnungen 61, 62 weisen rohrförmige Elemente oder offene zylindrische Profile 80 auf, die mit den gegenüberliegenden Seitenwänden 21c und 22c eines jeden Hauptträgers 21 bzw. 22 verschweißt sind. Die Profile 80 weisen einen mittig gelegenen Trennspalt 82 auf, um eine Verdrehflexibilität des Hauptrahmens 12 sicherzustellen, während ein Auftreten hoher Spannungen an den Verbindungsstellen zwischen den Profilen 80 und den Seitenwänden 21c, 22c vermieden werden kann. Eine Dichtscheibe oder eine flexible Dichtung 84 kann an dem Trennspalt 82 eingefügt werden, wobei es sich ergeben hat, dass durch einfaches zueinander dichtes Anordnen eine ausreichende Abdichtung erzielbar ist. Das Innere der Hauptträger 21, 22 ist im wesentlichen geschlossen, so dass keine Fremdkörper oder Verunreinigungen in das Innere der Hauptträger 21, 22 gelangen.

Die Öffnungen 63, 64, welche im Wesentlichen als rechtwinklig ausgebildet dargestellt sind, sind mit an den Hauptträgern 21, 22 angeschweißte Blechanordnungen 94 verstärkt, um eine Verstärkung des Hauptrahmens 12 darzustellen und um das Innere der Hauptträger 21, 22 gegen Fremdkörper und Verunreinigungen an den Öffnungen 63, 64 zu schützen. Um die Öffnungen 63, 64 herum sind Seitenverstärkungsbleche 103, 104 angeordnet, die mit den Seitenwänden 21c, 22c verschweißt sind, wobei die Seitenverstärkungsbleche 103, 104 Öffnungen aufweisen, die an die Öffnungen 63, 64 angepasst sind. Die Seitenverstärkungsbleche 103, 104 weisen nach innen gerichtete runde Ausschneidungen 105, 106 auf, um eine bessere seitliche Spannungsverteilung nahe der Öffnungen 63, 64 zu gewährleisten. Oberhalb der Öffnungen 63, 64 und oberhalb der entsprechenden Achsstützrahmen 24, 26 sind obere Verstärkungsbleche 113, 114 angebracht. Weitere Ausschneidungen 116 zur besseren Spannungsverteilung sind an den innen gelegenen Endbereichen der Verstärkungsbleche 113, 114 benachbart zu den innen gelegenen Endbereichen der Öffnungen 63, 64 vorgesehen. Ähnliche Blechanordnungen 118 sind unterhalb der Öffnungen 63, 64 und unterhalb der entsprechenden Achsstützrahmen 24, 26 angebracht.

## Patentansprüche

1. Rahmen für ein landwirtschaftliches Gerät (10) mit einem ersten und einem zweiten sich in Längsrichtung erstreckenden Hauptträger (21, 22), wobei die Hauptträger (21, 22) in Querrichtung zueinander beabstandet angeordnet sind, einem auf den Hauptträgern (21, 22) gelagerten Behälter (36) mit einem zwischen den Hauptträgern (21, 22) positionierten Auslasskanal (40) und einer Rohrleitungsanordnung (50), welche sich im Wesentlichen horizontal erstreckt, **dadurch gekennzeichnet, dass** wenigstens ein Hauptträger (21, 22) einen mit einer Öffnung (61, 62) versehenen Bereich aufweist, dass die Rohrleitungsanordnung (50) ausgehend vom Auslasskanal (40) durch die Öffnung (61, 62) des wenigstens einen Hauptträgers (21, 22) hindurch geführt ist und an eine Stelle außerhalb des Rahmens (12) führt und dass die Öffnung (61, 62) mit wenigstens einem Verstärkungselement (80) versehen ist, um den wenigstens einen Hauptträger (21, 22) im Bereich der Öffnung (61, 62) zu stabilisieren.

2. Rahmen nach Anspruch 1, **dadurch gekennzeichnet, dass** die Hauptträger (21, 22) als Hohlprofilträger mit gegenüberliegenden Seitenwänden (21c, 22c) ausgebildet sind und die Verstärkungselemente (80) sich in Querrichtung erstreckende Rohrelemente umfassen, die an die Seitenwände (21c, 22c) befestigt sind.

3. Rahmen nach Anspruch 1 oder 2, **dadurch gekennzeichnet, dass** die Verstärkungselemente (80) einen Trennspalt (82) aufweisen, um eine Verdrehungsflexibilität der Hauptträger (21, 22) zu gewährleisten und Spannungen in den Seitenwänden (21c, 22c) in den Bereichen der Öffnungen (61, 62) zu begrenzen.

4. Rahmen nach einem oder mehreren der vorhergehenden Ansprüche, **dadurch gekennzeichnet, dass** der Trennspalt (82) dicht aneinander angrenzende Kanten aufweist, um das Eindringen von Verunreinigungen in die Hauptträger (21, 22) zu verhindern.

5. Rahmen nach einem oder mehreren der vorhergehenden Ansprüche, **dadurch gekennzeichnet, dass** die Hauptträger (21, 22) untere Flächen (21b, 22b) aufweisen die eine untere Ebene (P2) definieren, wobei die Rohrleitungsanordnung (50) sich zwischen den Hauptträgern (21, 22) oberhalb der unteren Ebene (P2) erstreckt.

6. Rahmen nach einem oder mehreren der vorhergehenden Ansprüche, **dadurch gekennzeichnet, dass** die Hauptträger (21, 22) obere Flächen (21a, 22a) aufweisen die eine obere Ebene (P1) definieren, wobei die Rohrleitungsanordnung (50) sich zwischen den Ebenen (P1, P2) erstreckt.

7. Rahmen nach einem oder mehreren der vorhergehenden Ansprüche, **dadurch gekennzeichnet, dass** mit dem Rahmen (12) verbundene Achsanordnungen (14, 16) enthalten sind, wobei die Hauptträger (21, 22) Öffnungen (63, 64) aufweisen, durch welche Komponenten (28) für die Achsanordnungen (14, 16) hindurchführbar sind.

8. Rahmen nach einem oder mehreren der vorhergehenden Ansprüche, **dadurch gekennzeichnet, dass** die Hauptträger (21, 22) Verstärkungsbleche (113, 114) aufweisen, die zu den Öffnungen (63, 64) vertikal beabstandet angeordnet sind, um die Hauptträger (21, 22) im Bereich der Öffnungen (63, 64) zu stabilisieren.

9. Rahmen nach einem oder mehreren der vorhergehenden Ansprüche, **dadurch gekennzeichnet, dass** die Hauptträger (21, 22) mit an den Öffnungen (63, 64) angeordneten Seitenblechen (103, 104) versehen sind, wobei die Seitenbleche (103, 104) in Längsrichtung ausgerichtete Endbereiche aufweisen, die mit abgerundeten Ausschneidungen (106) versehen sind, um Spannungsbelastungen am Hauptträger (21, 22) neben den Öffnungen (63, 64) zu verteilen.

10. Rahmen nach einem oder mehreren der vorhergehenden Ansprüche, **dadurch gekennzeichnet, dass** die Rohleitungsanordnung (50) eine Versorgungsleitung (70) aufweist.

11. Rahmen nach einem oder mehreren der vorhergehenden Ansprüche, **dadurch gekennzeichnet, dass** die Komponenten (28) für die Achsanordnungen (14, 16) Komponenten (28) zur Verstellung der Spurweite der Achsanordnung (14, 16) umfassen, die sich horizontal durch die Hauptträger (21, 22) erstrecken, wobei die Hauptträger (21, 22) einen Teil der Komponenten (28) schützend gegen Pflanzen abschirmen, wenn diese unterhalb der Hauptträger (21, 22) passieren.

12. Rahmen nach einem oder mehreren der vorhergehenden Ansprüche, **dadurch gekennzeichnet, dass** die Achsanordnungen (14, 16) bewegbar angeordnet sind und hydraulische Komponenten (28) aufweisen die zur Bewegung der Achsanordnungen (14, 16) einsetzbar sind.

13. Rahmen nach einem oder mehreren der vorhergehenden Ansprüche, **dadurch gekennzeichnet, dass** die Verstärkungselemente (80) sich horizontal erstreckende Rohre aufweisen, die an die Seitenwände (21c, 22c) befestigt sind und durch welche wenigstens ein Teil der Rohrleitungsanordnung (50, 70) durchführbar ist.

14. Rahmen nach einem oder mehreren der vorhergehenden Ansprüche, **dadurch gekennzeichnet, dass** mit den Hauptträgern (21, 22) verbundene Achsstützrahmen (24, 26) enthalten und die Verstärkungsbleche (113, 114) mit den Achsstützrahmen (24, 26) und den Hauptträgern (21, 22) verbunden sind, wobei die Verstärkungsbleche (113, 114) im Bereich der Öffnungen (63, 64) angeordnet sind.

15. Landwirtschaftliches Gerät, insbesondere landwirtschaftliche Feldspritze, mit einem Rahmen gemäß einem oder mehreren der vorhergehenden Ansprüche.

## Claims

1. Frame for an agricultural implement (10), having a first and a second main carrier (21, 22) extending in the longitudinal direction, the main carriers (21, 22) being disposed at a spacing relative to each other in the transverse direction, having a container (36) mounted on the main carriers (21, 22) with an outlet channel (40) which is positioned between the main carriers (21, 22) and having a pipeline arrangement (50) which extends essentially horizontally, **characterised in that** at least one main carrier (21, 22) has a region provided with an opening (61, 62), **in that** the pipeline arrangement (50), starting from the outlet channel (40), is guided through the opening (61, 62) of the at least one main carrier (21, 22) and leads to a position outwith the frame (12) and **in that** the opening (61, 62) is provided with at least one reinforcement element (80) in order to stabilise the at least one main carrier (21, 22) in the region of the opening (61, 62).

2. Frame according to claim 1, **characterised in that** the main carriers (21, 22) are configured as hollow profile carriers with oppositely situated lateral walls (21c, 22c) and the reinforcement elements (80) comprise pipe elements which extend in the transverse direction and are mounted on the lateral walls (21c, 22c).

3. Frame according to claim 1 or 2, **characterised in that** the reinforcement elements (80) have a separating gap (82) in order to ensure rotational flexibility of the main carriers (21, 22) and in order to delimit tensions in the lateral walls (21c, 22c) in the regions of the openings (61, 62).

4. Frame according to one or more of the preceding claims, **characterised in that** the separating gap (82) has edges which abut tightly against each other in order to prevent penetration of contaminants into the main carriers (21, 22).

5. Frame according to one or more of the preceding claims, **characterised in that** the main carriers (21, 22) have lower faces (21b, 22b) which define a lower plane (P2), the pipeline arrangement (50) extending between the main carriers (21, 22) above the lower plane (P2).

6. Frame according to one or more of the preceding claims, **characterised in that** the main carriers (21, 22) have upper faces (21a, 22a) which define an upper plane (P1), the pipeline arrangement (50) extending between the planes (P1, P2).

7. Frame according to one or more of the preceding claims, **characterised in that** axle arrangements (14, 16) which are connected to the frame (12) are included, the main carriers (21, 22) having openings (63, 64) through which components (28) for the axle arrangements (14, 16) can be guided.

8. Frame according to one or more of the preceding claims, **characterised in that** the main carriers (21, 22) have reinforcement metal sheets (113, 114) which are disposed at a spacing vertically relative to the openings (63, 64) in order to stabilise the main carriers (21, 22) in the region of the openings (63, 64).

9. Frame according to one or more of the preceding claims, **characterised in that** the main carriers (21, 22) are provided with lateral metal sheets (103, 104) which are disposed at the openings (63, 64), the lateral metal sheets (103, 104) having end regions which are orientated in the longitudinal direction and are provided with rounded cut-outs (106) in order to distribute tension loads on the main carrier (21, 22) next to the openings (63, 64).

10. Frame according to one or more of the preceding claims, **characterised in that** the pipeline arrangement (50) has a supply line (70).

11. Frame according to one or more of the preceding claims, **characterised in that** the components (28) for the axle arrangements (14, 16) comprise components (28) for adjusting the track width of the axle arrangement (14, 16) and extend horizontally through the main carriers (21, 22), the main carriers (21, 22) screening a part of the components (28) in a protective manner against plants when these pass below the main carriers (21, 22).

12. Frame according to one or more of the preceding claims, **characterised in that** the axle arrangements (14, 16) are disposed movably and have hydraulic components (28) which can be used to move the axle arrangements (14, 16).

13. Frame according to one or more of the preceding claims, **characterised in that** the reinforcement elements (80) have horizontally extending pipes which are mounted on the lateral walls (21c, 22c) and through which at least one part of the pipeline arrangement (50, 70) can be guided.

14. Frame according to one or more of the preceding claims, **characterised in that** axle support frames (24, 26) which are connected to the main carriers (21, 22) are included and the reinforcement metal sheets (113, 114) are connected to the axle support frames (24, 26) and to the main carriers (21, 22), the reinforcement metal sheets (113, 114) being disposed in the region of the openings (63, 64).

15. Agricultural implement, in particular agricultural field sprayer, having a frame according to one or more of the preceding claims.

## Revendications

1. Châssis pour une machine agricole (10) comportant un premier et un deuxième supports principaux (21, 22) orientés dans le sens longitudinal, les supports principaux (21, 22) étant disposés en étant écartés transversalement l'un de l'autre, un réservoir (36) monté sur les supports principaux (21, 22) et comportant un conduit d'évacuation (40), positionné entre les supports principaux (21, 22), et un système de conduites tubulaires (50) orienté sensiblement horizontalement, **caractérisé en ce qu'**au moins un support principal (21, 22) comporte une zone munie d'une ouverture (61, 62), **en ce que** le système de conduites tubulaires (50) est guidé à partir du conduit d'évacuation (40) à travers l'ouverture (61, 62) dudit au moins un support principal (21, 22) et mène vers un emplacement en dehors du châssis (12), et **en ce que** l'ouverture (61, 62) est munie d'au moins un élément de renfort (80) afin de stabiliser ledit au moins un support principal (21, 22) dans la zone de l'ouverture (61, 62).

2. Châssis selon la revendication 1, **caractérisé en ce que** les supports principaux (21, 22) sont réalisés sous forme de supports profilés creux avec des parois latérales (21 c, 22c) opposées, et les éléments de renfort (80) sont formés par des éléments tubulaires orientés dans le sens transversal, qui sont fixés contre les parois latérales (21 c, 22c).

3. Châssis selon la revendication 1 ou 2, **caractérisé en ce que** les éléments de renfort (80) comportent une fente de séparation (82) afin de garantir une flexibilité de rotation des supports principaux (21, 22) et de limiter les tensions dans les parois latérales (21 c, 22c) dans les zones des ouvertures (61, 62).

4. Châssis selon une ou plusieurs des revendications précédentes, **caractérisé en ce que** la fente de séparation (82) comporte des bords étroitement adjacents afin d'empêcher la pénétration de saletés dans les supports principaux (21, 22).

5. Châssis selon une ou plusieurs des revendications précédentes, **caractérisé en ce que** les supports principaux (21, 22) comportent des surfaces inférieures (21 b, 22b), qui définissent un plan inférieur (P2), le système de conduites tubulaires (50) s'étendant entre les supports principaux (21, 22) au-dessus du plan inférieur (P2).

6. Châssis selon une ou plusieurs des revendications précédentes, **caractérisé en ce que** les supports principaux (21, 22) comportent des surfaces supérieures (21 a, 22a), qui définissent un plan supérieur (P1), le système de conduites tubulaires (50) s'étendant entre les plans (P1, P2).

7. Châssis selon une ou plusieurs des revendications précédentes, **caractérisé en ce qu'**il est prévu des systèmes d'essieux (14, 16) reliés au châssis (12), les supports principaux (21, 22) comportant des ouvertures (63, 64), à travers lesquelles peuvent être guidés des composants (28) pour les systèmes d'essieux (14, 16).

8. Châssis selon une ou plusieurs des revendications précédentes, **caractérisé en ce que** les supports principaux (21, 22) comportent des tôles de renfort (113, 114) qui sont disposées en étant écartées verticalement par rapport aux ouvertures (63, 64) en vue de stabiliser les supports principaux (21, 22) dans la zone des ouvertures (63, 64).

9. Châssis selon une ou plusieurs des revendications précédentes, **caractérisé en ce que** les supports principaux (21, 22) sont munis de tôles latérales (103, 104), agencées au niveau des ouvertures (63, 64), les tôles latérales (103, 104) comportant des zones d'extrémité orientées dans le sens longitudinal, qui sont munies de découpes (106) arrondies, en vue de répartir les sollicitations de tension sur les supports principaux (21, 22) à côté des ouvertures (63, 64).

10. Châssis selon une ou plusieurs des revendications précédentes, **caractérisé en ce que** le système de conduites tubulaires (50) comporte une conduite d'alimentation (70).

11. Châssis selon une ou plusieurs des revendications précédentes, **caractérisé en ce que** les composants (28) pour les systèmes d'essieux (14, 16) sont formés par des composants (28) pour le réglage de l'écartement de voie du système d'axes (14, 16), lesquels s'étendent horizontalement à travers les supports principaux (21, 22), les supports principaux (21, 22) masquant une partie des composants (28) de manière à les protéger contre les végétaux lorsque ceux-ci passent en dessous des supports principaux (21, 22).

12. Châssis selon une ou plusieurs des revendications précédentes, **caractérisé en ce que** les systèmes d'essieux (14, 16) sont disposés de manière mobile et comportent des composants (28) hydrauliques qui peuvent être utilisés pour déplacer les systèmes d'essieux (14, 16).

13. Châssis selon une ou plusieurs des revendications précédentes, **caractérisé en ce que** les éléments de renfort (80) comportent des tubes orientés horizontalement, qui sont fixés contre les parois latérales (21 c, 22c) et à travers lesquels peut être guidée au moins une partie du système de conduites tubulaires (50, 70).

14. Châssis selon une ou plusieurs des revendications précédentes, **caractérisé en ce qu'**il est prévu des cadres de support d'essieux (24, 26), reliés aux supports principaux (21, 22), et les tôles de renfort (113, 114) sont reliées aux cadres de support d'essieux (24, 26) et aux supports principaux (21, 22), les tôles de renfort (113, 114) étant disposées dans la zone des ouvertures (63, 64).

15. Machine agricole, en particulier machine agricole de pulvérisation, comportant un châssis selon une ou plusieurs des revendications précédentes.
